# EUROPEAN PATENT APPLICATION

(11) **EP 3 388 353 A1**
(43) Date of publication of application: **17.10.2018**
(21) Application number: 18166372.5
(22) Date of filing: 09.04.2018
(51) Int. Cl.: B65D 5/20, B65D 5/24, A47J 36/02, A21B 3/13, B65D 81/34, B65D 5/62

(54) **COOKING VESSEL STORABLE AS FLAT SHEET**

(30) Priority: 10.04.2017 BE 201705251
(71) Applicant: I.C.B. NV, 3271 Scherpenheuvel-Zichem (BE)
(72) Inventor: Bergen, Johan, B-3271 Averbode (BE)
(74) Representative: IPLodge bvba

(57) **Abstract**

Folded, liquid retaining, re-usable, glueless, leak resistant and heat resistant cooking vessels are described such as steaming pouches of the "papillote" type made from a flat sheet blank (1) by means of simple machining operations such as cutting, stamping and slitting, scoring and folding only, the vessels being storable as flat sheets (1) before use and between uses. The closed vessel ready for use in cooking can be folded by a user into a pouch which contains the food to be cooked or warmed which may include liquid. Embodiments of the invention can be used for cooking on a barbecue, in an oven or in a microwave oven and are easily cleaned even in a dishwasher as they can be flattened after use without rupture of surfaces or tearing.

## Description

The present invention relates to folded, liquid retaining, re-usable, glueless, leak resistant cooking vessels such as a steaming pouch of the "papillote" type made from a flat sheet by means of, for example, scoring, folding, cutting, stamping and slitting only, and storable as flat sheets before and after use. The present invention relates to methods of making a steam pouch from a single sheet of material which can be folded into the pouch and dismantled or undone to generate the flat sheet again without rupture or tearing of the sheet or other materials like glued or adhered surfaces, rivets, or welds..

### BACKGROUND

Leak resistant retaining plastic trays are known which are made from moulded plastic such as expanded polystyrene. These take up a lot of space as they cannot be laid flat without rupture or tearing. Retaining trays are also known made from cut, scored, and folded blanks such as made of cardboard. These can be used to store and transport food which can even include liquids if the cardboard is sealed on its surface. For cooking vessels such as papillotes it is preferred to use leak resistant materials that take up little space for shipping and can be formed at the customer's location. For example, aluminum foil is used for this purpose but is difficult to clean and reuse.

EP0837010 discloses a wrapper consisting of a film to be closed by two twist wraps on either side of an article to be wrapped and comprising, on the inside with respect to the article to be wrapped, a sealing coat arranged along two transversal strips on either side of the article to be wrapped and extending parallel to an axis passing through the two twist wraps. The method consists in sealing the wrapper at the transversal strips. The film may, for example, be a cellophane film, a cast polypropylene film, waxed paper, an aluminum film or laminate. The use of sealing materials makes the product unsuitable for cooking. Twisted sheets like twisted aluminium sheets are difficult to undo into a flat sheet again.

FR 3017120 discloses in one embodiment a blank which can be folded into a carton tray, for use with and for preparing food in a microwave oven. The blank can be made of carton. The carton can be covered by a film of polyethylene terephthalate (PET). The bottom panel is quadratic and four opposing side panels are folded substantially upright about respective fold lines with respect to the bottom panel. With the side panels folded substantially upright, gussets in the corners of the bottom panel are folded along fold lines into a triangular shape and each gusset is folded against the outer surface of a side panel and adhered thereto. In order to avoid the risk of contact between the food and the adhesive the gussets are glued on the outside of the side panels. The blank also includes a cover for the tray formed as a flap from one side of the tray. The tray is used with a separate sheet of sulphurised paper resistant to liquids and fats. Carton bums at about 170°C if coated with PET. PET has a melting point of 255°C and hence safe till under 200°C whereas PTFE is safe up to 260°.

### SUMMARY OF THE INVENTION

Embodiments of the present invention relate to folded, liquid retaining, re-usable, glueless, leak resistant and heat resistant cooking vessels such as steaming pouches of the "papillote" type made from a flat sheet blank by means of simple machining operations such as cutting, stamping and slitting, scoring and folding only, the vessels being storable as flat sheets before use and between uses. The enclosed vessel ready for use in cooking can be folded by a user into a pouch which contains the food to be cooked or warmed which may include liquid. Embodiments of the present invention can be used for cooking on a barbecue, in an oven or in a microwave oven and are easily cleaned even in a dishwasher as they can be flattened after use without rupture of surfaces or tearing as would occur with glued, adhered or welded products. The pouch can be undone to form a flat sheet for cleaning. No food rests will remain in various parts of the vessel as embodiments of the present invention can be flattened and the resulting sheet can be cleaned which is easier and quicker than with a vessel with a 3D shape. There are therefore no dead spaces when the vessel is flattened. Furthermore, use of the vessel as a steaming pouch in or on the oven creates a steaming effect, i.e. the same effect as a folded papillote aluminum foil would do.

The base of the vessel can be quadratic such as square or rectangular in shape or other polygonal shapes such as octagonal or hexagonal. The vessel in use can be in the form of a tray made from the single sheet blank, i.e. having a base and four side walls and flaps to close the top. The flat blank is made of a non-porous anti-stick material able to withstand cooking temperatures such as up to 260°C and for short time periods (about 20 to 30 minutes) even 320°C, leak free. A suitable material is knotted, woven or non-woven glass fibres coated with a heat-resistant non-stick material such as a fluoropolymer of which PTFE (polytetrafluoroethylene) or PFA (e.g. a perfluoroalkoxy copolymer resin) or FEP (fluorinated ethylene propylene) are examples or with other high temperature flexible plastics such as PEEK (Polyether ether ketone) or similar are examples. The tray has two pairs of opposing side panels or walls, these walls being integral with and hingedly connected by gussets at the corners of the tray to form the liquid retaining tray. The gussets are kept closed without use of glue, adhesive, or snap fixtures, by means of flaps which, in the completed pouch, extend from the top of each side wall towards the opposing side wall and which are engaged with each other by reversible attachment means. The flaps have connecting portions only made, for example, by cutting, drilling, stamping, scoring or slitting from the blank which allows a flap from one side to be connected to a flap from another side. The flaps can be disengaged from each other without rupture or tearing of materials as would occur with glued, adhered or welded materials. To connect the flaps these are rotated to pull the side panels into their final upright position as side walls to form a tray with the corner gussets closed.

Accordingly, embodiments of the present invention provide a folded, liquid retaining, re-usable, glueless, leak resistant and heat resistant cooking vessel made from a single flat sheet blank by means of cutting, drilling and slitting, scoring and folding only, the vessel being storable as flat sheet between uses, the flat sheet blank being made of non-stick coated or impregnated knotted, woven or non-woven glass fibres; the vessel having a liquid retaining tray with a polygonal base, pairs of opposing side walls integrally connected by gussets at corners of the tray to form the liquid retaining tray, further comprising opposing flaps integrally connected to the opposing side walls which form the top of the vessel when folded over the tray and attached to each other.

The polygonal base of the vessel can be quadratic with a square or rectangular shape.

The liquid retaining tray has a base and can have four side walls and four flaps.

The non-stick coated or impregnated knotted, woven or non-woven glass fibres, can be coated or impregnated with a fluoropolymer or a high temperature plastic. The fluoropolymer can be PTFE (polytetrafluoroethylene) or PFA (a perfluoroalkoxy copolymer resin) or FEP (fluorinated ethylene propylene) or similar. The high temperature plastics can be PEEK (polyether ether ketone).

It is preferred if the material used for the single blank is a food grade material.

The gussets are kept closed without use of glue, welds, adhesive, fasteners or snap fixtures by means of the folded opposing flaps which extend from each side wall to the opposing side wall.

The opposing flaps can have connecting portions only made by cutting, drilling, stamping or slitting from the blank, the connecting portions being for connecting a flap from one side to be connected to a flap from another side reversibly.

Connected flaps are configured to pull the side walls into their final position in the cooking vessel with the gussets at the corners being closed.

The polygonal base can be a rectangle with first and second opposing side walls being longer than third and fourth opposing side walls.

The first to fourth flaps can be each integrally formed with one of the first to fourth opposing side walls, respectively.

One of the first and second flaps can be reversibly connected to the third and fourth flaps leaving the second or first side wall open for receipt of food.

One of the third and fourth flaps can be reversibly connected to the first and second flaps leaving the fourth or third side wall open for receipt of food.

The base, side walls, flaps, gussets and attachment portions are preferably configured to be dismantled or dismounted to regain the single flat sheet blank for cleaning and storing without rupture or tearing.

The present invention also includes use of the cooking vessel described above in a process of cooking. The cooking can be in an oven, in a microwave oven or on a barbecue.

The present invention also includes a method of forming a folded, liquid retaining, re-usable, glueless, leak resistant and heat resistant cooking vessel from a single flat sheet blank as described above, the method comprising:
opposing side panels of the flat sheet blank are formed into side walls of a tray by the side panels being rotated about fold lines respectively for each side wall to attain a substantially upright position, with respect to a bottom panel,
with the side panels folded substantially upright about the respective fold lines, gussets are formed by folding about respective fold lines to form a tray, each gusset being folded to be inside the tray at a corner of the bottom panel, whereby the gussets are maintained in this position without the use of adhesive, glue, welds, or fasteners; outer flaps are rotated and folded inwardly at fold lines, whereby each outer flap has means for connecting to one or more of the other outer flaps, the means for connecting are made by processes folding, scoring, drilling, slitting and cutting from the blank and do not require glue or adhesive or welding or separate fasteners, wherein three outer flaps are connected to each other to leave one side open for food entry.

The method can include rotating the remaining outer flap and attaching to at least one other outer flap.

The method can also include unfolding rupture-free or tear-free one or more of the outer flaps as well as one or more of the associated side panels.

### BRIEF DESCRIPTION OF THE DRAWINGS

Figure. 1 is a plan view of a unitary blank of a foldable material according to an embodiment of the present invention that may be folded to form a steaming pouch with a built in cooking tray of the papillote type without requiring glue.
Figure 2 is a plan view of a further unitary blank of a foldable material according to an embodiment of the present invention that may be folded to form a steaming pouch with a built in cooking tray of the papillote type without requiring glue.
Figure 3 shows a partly closed (or partly open) arrangement of the steaming pouch of figure 2.
Figure 4 shows a closed arrangement of the steaming pouch of figure 2 ready for cooking or warming.

### DETAILED DESCRIPTION OF THE ILLUSTRATIVE EMBODIMENTS

Embodiments of the present invention are described with reference to the figures. The claimed subject matter may be embodied in a variety of ways, and may include different features or method steps. The figures are schematic only.

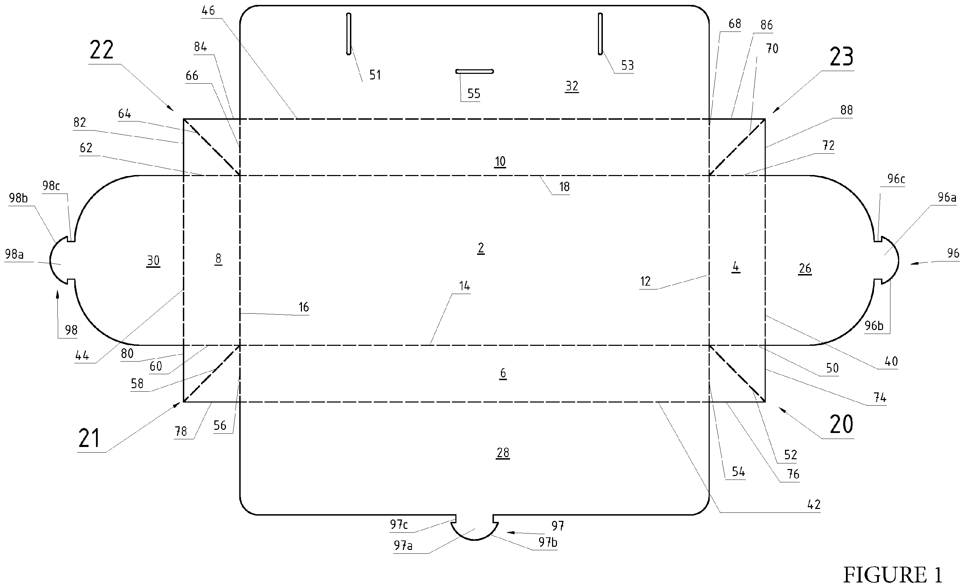

Figure 1 shows a single blank 1 of foldable material before use or after use. To prepare for use the single blank 1 can be folded into a cooking vessel such as a steaming pouch without use of glue or adhesive. The foldable material may be made from a flexible, non-porous, anti-stick material such as a fluropolymer coated or impregnated or other high temperature plastic coated or impregnated knotted, woven or non-woven glass fibres in the form of a coated or impregnated mesh or net or weave or non-woven structure made with the glass fibres and then coated or impregnated. The material may be single-ply or multiply. Examples of a fluropolymer are PTFE (polytetrafluoroethylene) or PFA (e.g. a perfluoroalkoxy copolymer resin) or FEP (fluorinated ethylene propylene) and an example of a high temperature plastic is PEEK (polyether ether ketone) or similar.

It is preferred if the materials used to make single blank 1 are food grade. For example, the FSSC 22000 Food Safety System Certification covers the key requirements of many existing food safety standards and programs including: GMP, HACCP, SQF, BRC, IFS and GlobalGAP. FSSC 22000 is considered to be the most comprehensive food safety management system certification scheme because it fully incorporates ISO 22000, sector specific prerequisite programs (PRPs) such as ISO/TS 22002-1 and ISO/TS 22002, HACCP and the application steps of CODEX Alimentarius. The FSSC 22000 scheme is recognized by the Global Food Safety Initiative (GFSI).

The blank 1 includes a bottom panel 2 that is generally rectangular in shape and is delineated by means of fold lines 12, 14, 16, 18 which can be scored for ease of bending. Other shapes are included within the scope of the present invention, for example, the bottom panel 2 may be square or oblong or hexagonal or octagonal. Blank 1 includes panels 4, 6, 8, 10 that have fold lines 12, 14, 16, 18 which can be scored and which are common, i.e. integral (respectively) with the edges of bottom panel 2. The panels 4, 6, 8, 10 form side walls of a tray in the final steaming pouch. The side panels 4, 6, 8, 10 are integral with and foldably connected to the edges of bottom panel 2 at fold lines 12, 14, 16, 18, respectively. The junctions of side panels 4 and 6, 6 and 8, 8 and 10, 10 and 4 after folding upwardly form corners of the tray via foldable gussets 20, 21, 22, 23 respectively. The foldable gussets 20, 21, 22, 23 are formed from the blank 1 by folding along fold lines 50, 52, 54 (optionally scored) which form gusset 20, along fold lines 56, 58 60, (optionally scored) which form gusset 21, along fold lines 62, 64, 66 (optionally scored) which form gusset 22, and along fold lines 68, 70, 72 (optionally scored) which form gusset 23.

Outer flaps 26, 28, 30, 32 are integral with and foldably connected to the respective side panels 4, 6, 8, 10 at fold lines 40, 42, 44, 46, respectively. Fold lines 40, 42, 44, 46 can be scoured. The outer flaps 26, 28, 30, 32 need not be co-extensive with fold lines 40, 42, 44, 46. For example, they could connect with only part of fold lines 40, 42, 44, 46, e.g. one part or several spaced parts. For example, in Figure 1 flap 30 is coextensive with the fold line 44, i.e. is as wide as that line. As an alternative, the width of flap 30 can be reduced to be shorter than fold line 44. This means that less material is cut from the blank 1. For example both flaps 26 and 30 could be reduced in width in this way without interfering with the insertion of inserting means 96 and 98 in receiving means 53 and 51 respectively. Such a reduction in width may allow steam to escape from the pouch during cooking and this may be perceived as a disadvantage. Hence, making the flaps 26, 28, 30, 32 coextensive with the associated fold lines 40, 42, 44, 46 is preferred.

An outer flap 26, 28, 30, 32 can have means for connecting to another of the outer flaps 26, 28, 30, 32 in such a manner as to collapse the gussets 20, 21, 22, 23 preferably so that the gusset extends towards the inner part of the tray. When collapsed two triangular parts of the gusset come together between adjacent side panels, the positions of the adjacent side walls being at 90° to each other for a rectangular base 2 thereby preventing the gussets from opening. Optionally, one or more gussets may extend away from the tray, i.e. away from the inside of the tray, i.e. outwardly, but then vapour such as steam may escape more easily from the steaming pouch. The means for connecting are preferably made by processes such as folding, scoring drilling, slitting and cutting from the blank 1 and do not require glue or adhesive or welds or separate fasteners like clips, coils, screws, bolts, etc. The means for connecting can be used to attach one flap to another in a reversible manner, i.e. the engagement between the flaps can be disengaged to allow the sheet material 1 to be flattened after use, ready for cleaning and storing. The disengagement is rupture-free or tearing free i.e. does not require any rupturing of materials or tearing as would occur with glued, adhered, welded or moulded trays. The means for connecting can include receiving means 51, 53, 55 in flap 32 and inserting means 96 on flap 26, 97 on flap 28 and 98 on flap 30. The receiving means 51, 53, 55 can be each a slit at an angle such that when the flap 32 is rotated to cover the top of the tray, each of the receiving means 51, 53, 55 receives a tab 98, 96, 97 respectively when flaps 30, 26, 28 respectively are rotated into position on the top of the tray.

The gussets 20, 21, 22, 23 are delineated in blank 1 by three fold lines 50, 52, 54 and cut lines 74, 76 (gusset 20), fold lines 56, 58 60, and cut lines 78, 80 (gusset 21), fold lines 62, 64, 66 and cut lines 82, 84 (gusset 22), fold lines 68, 70, 72 and cut lines 86, 88 (gusset 23). When flaps 26, 28 30 are rotated to form and cover the tray each gusset 20, 21, 22, 23 is preferably tucked towards the interior of the tray, so that in the completed tray each gusset 20, 21, 22, 23 lies preferably inside the tray. One or more gussets can be tucked towards the exterior of the tray, whereby the steaming effect will still be present, though in a lesser way.

A further embodiment of the present invention comprises a method of forming a folded, liquid retaining, re-usable, glueless, leak resistant and heat resistant cooking vessel such as a steaming pouch of the "papillote" type from a single flat sheet blank by means, for example of drilling, cutting, stamping or slitting, scoring and folding only, the vessels being storable as flat sheets between uses, the method having the steps:
1) Opposing side panels 4, 6, 8, 10 of blank 1 form side walls of the tray by the side panels being rotated about the fold lines 12, 14, 16, 18 respectively to attain a substantially upright position, e.g. to an angle of approximately 60-90 degrees with respect to the bottom panel 2 which is held horizontal. The same can be done if the bottom panel 2 is held vertically or in any other position.
2) With the side panels 4, 6, 8, 10 folded substantially upright about respective fold lines 12, 14, 16, 18, each of the foldable gussets 20, 21, 22, 23 is folded about scored fold lines 50, 52, 54 (gusset 20), scored fold lines 56, 58 60, (gusset 21), scored fold lines 62, 64, 66 (gusset 22), scored fold lines 68, 70, 72 (gusset 23) such that each gusset 20, 21, 22, 23 is folded to be preferably inside the tray.
3) The gussets 20, 21, 22, 23 are maintained in this position without the use of adhesive, glue, welds, fasteners such as screws, bolts, clips, etc. Outer flaps 26, 28, 30, 32 are rotated and folded inwardly at fold lines 40, 42, 44, 46, whereby an outer flap 26, 28, 30, 32 has means for connecting to one or more of the outer flaps 26, 28, 30, 32 in such a manner as to form the tray in a steaming pouch and to collapse the gussets 20, 21, 22, 23 preferably inwardly into the tray and to prevent them from opening. The means for connecting are made by processes, for example such as folding, scoring, drilling, slitting and cutting from the blank 1 and do not require glue or adhesive or welding or separate fasteners such as clips, screws, bolts, clamps, magnets. In the case of the embodiment of the tray shown in Fig. 1, initially three flaps 26, 30 and 32 are connected to each other by the inserting means 96 and 98 in the form of tabs being inserted into receiving means 53 and 51 respectively in the form of slits. As flap 28 has not been folded or rotated, the side wall of the tray formed by side panel 6 is open. Food can now be loaded onto the bottom panel 2 through this side wall.

When placing the food in the tray it is possible to hold the tray slightly inclined so that base 2 and flap 28 are slightly inclined upwardly along an axis parallel to folding line 14. After the food is in the vessel flap 28 can be rotated to cover flap 32 and inserting means 97 of flap 28 such as a tab is inserted in receiving means 55 of flap 32 such as a slit. The steaming pouch is now complete and ready for storing in a refrigerator or deep freeze for use later on or for warming or cooking, e.g. afterwards, the pouch can be placed in an oven, a microwave or on a barbecue. After warming or cooking, food may be released from the tray by unfolding rupture-free or tear-free one of the outer flaps 26, 28, 30, 32 as well as its associated side panel 4, 6, 8, 10 and pouring or sliding the food out of the opening formed thereby. Alternatively, the cooked food can be left in the tray and the flaps 26, 28, 30, 32 are folded back rupture-free or tear-free so that the food can be eaten from the tray.

An alternative is to attach flap 32 to flaps 28 and 30 or to attach flap 32 to flaps 26 and 28 leaving an end wall 4 or 8 respectively, open on a short side and to slide the food in and out at this side.

To clean and to store the tray, the flaps 26, 28, 30, 32 can all be opened rupture-free or tear-free and the blank 1 regained. Cleaning can be done by hand or in a dishwasher. The single flat sheet 1 can be stored in very little space and reused as described above.

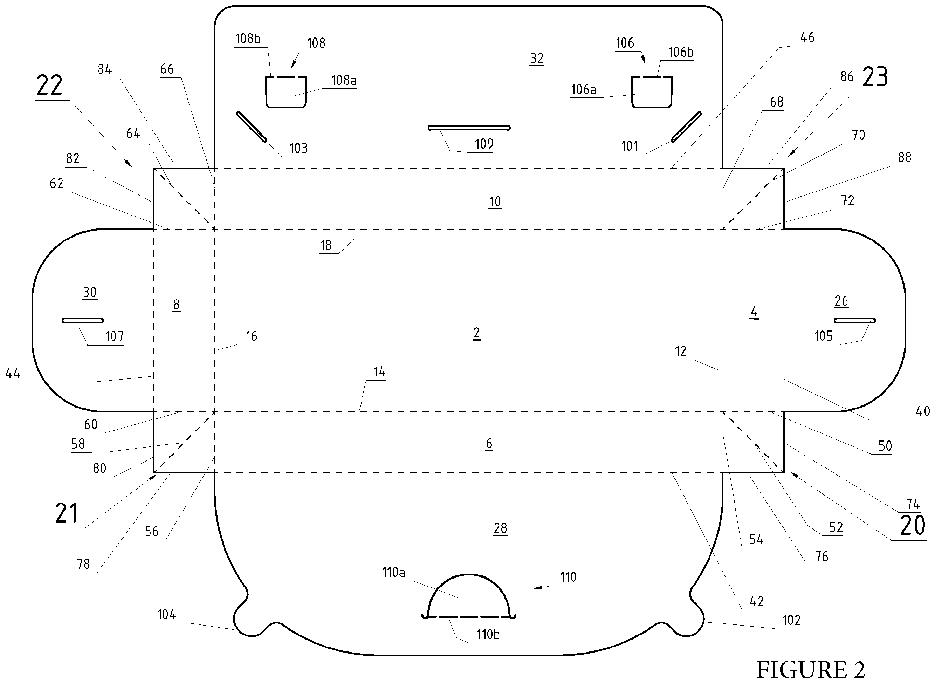

Figures 2 to 4 show a steaming pouch in accordance with another embodiment of the present invention. Figure 2 shows a single blank 1 of foldable material before use or after use. To prepare for use the single blank 1 can be folded into a cooking vessel such as a steaming pouch without use of welds, glue or adhesive or separate fasteners such as clips. The foldable material may be made from a non-porous, anti-stick material such as a fluorine polymer or other high temperature plastic coated or impregnated knotted, woven or non-woven glass fibres in the form of a coated or impregnated mesh or net or weave or non-woven structure made with glass fibres. The material may be single-ply or multiply. Examples of a fluropolymer include PTFE (polytetrafluoroethylene) or PFA (e.g. a perfluoroalkoxy copolymer resin) or FEP (fluorinated ethylene propylene) and an example of a high temperature plastic is PEEK (Polyether ether ketone) or similar.

As specified for the first embodiment it is preferred if the materials used to make single blank 1 are food grade. For example, the FSSC 22000 Food Safety System Certification covers the key requirements of many existing food safety standards and programs including: GMP, HACCP, SQF, BRC, IFS and GlobalGAP. FSSC 22000 is considered to be the most comprehensive food safety management system certification scheme because it fully incorporates ISO 22000, sector specific prerequisite programs (PRPs) such as ISO/TS 22002-1 and ISO/TS 22002, HACCP and the application steps of CODEX Alimentarius. The FSSC 22000 scheme is recognized by the Global Food Safety Initiative (GFSI).

As for the first embodiment described with reference to Figure 1, the blank 1 of Figure 2 includes a bottom panel 2 that is generally rectangular in shape and is delineated by means of fold lines 12, 14, 16, 18 which can be scored. Other shapes are included within the scope of the present invention, for example, the bottom panel 2 may be square or oblong or hexagonal or octagonal. Blank 1 includes panels 4, 6, 8, 10 that have fold lines 12, 14, 16, 18 which can be scored and which are common, i.e. integral with a respective edge of bottom panel 2. The panels 4, 6, 8, 10 form side walls of a tray in the final steaming pouch. The side panels 4, 6, 8, 10 are integral with and foldably connected to the edges of bottom panel 2 at fold lines 12, 14, 16, 18, respectively. The junctions of side panels 4 and 6, 6 and 8, 8 and 10, 10 and 4 after folding upwardly form corners of the tray having foldable gussets 20, 21, 22, 23 respectively. The foldable gussets 20, 21, 22, 23 are formed from the blank 1 by folding along fold lines 50, 52, 54 (optionally scored) which form gusset 20, fold lines 56, 58 60, (optionally scored) which form gusset 21, fold lines 62, 64, 66 (optionally scored) which form gusset 22, and fold lines 68, 70, 72 (optionally scored) which form gusset 23.

Outer flaps 26, 28, 30, 32 are integral with and foldably connected to the respective side panels 4, 6, 8, 10 at fold lines 40, 42, 44, 46, respectively. Fold lines 40, 42, 44, 46 can be scoured. The outer flaps 26, 28, 30, 32 need not be co-extensive with fold lines 40, 42, 44, 46. For example, they could connect with only part of fold lines 40, 42, 44, 46, e.g. one part or several spaced parts. For example, in Figure 2 flap 30 is coextensive with the fold line 44, i.e. is as wide as that line. As an alternative, the width of flap 30 can be reduced to be shorter than fold line 44. This means that less material is cut from the blank 1. For example, both flaps 26 and 30 could be reduced in width in this way without interfering with the insertion of inserting means 106 and 108 in receiving means 105 and 107 respectively. Such a reduction in width may allow steam to escape from the pouch during cooking and this may be perceived as a disadvantage. Hence, making the flaps 26, 28, 30, 32 coextensive with the associated fold lines 40, 42, 44, 46 is preferred.

An outer flap 26, 28, 30, 32 can have means for connecting to another of the outer flaps 26, 28, 30, 32 in such a manner as to collapse the gussets 20, 21, 22, 23 preferably so that the gusset extends towards the inner part of the tray. When collapsed two triangular parts of each gusset come together between adjacent side panels. For a rectangular or square tray the positions of the adjacent side walls are at 90° to each other thereby preventing the gussets from opening. Optionally, one or more gussets may extend away from the tray, i.e. away from the inside of the tray but then vapour such as steam may escape more easily from the steaming pouch. The means for connecting are preferably made by processes such as folding, scoring drilling, slitting and cutting from the blank 1 and do not require glue or adhesive or separate fasteners like clips, coils, screws, bolts, etc. The means for connecting can be used to attach one flap to another in a reversible manner, i.e. the engagement between the flaps can be disengaged to allow the sheet material 1 to be flattened after use ready for cleaning and storing. The disengagement is rupture-free or tear-free i.e. does not require any rupturing of materials or tearing as would occur with glued, adhered, welded, rivetted or moulded trays.

The means for connecting can include receiving means 101, 103, 109 in flap 32 and 105 in flap 26 and 107 in flap 30 for example. Inserting means 102, 104, 110 can be located on flap 28, and inserting means 106, 108 can be located on flap 32. The receiving means 101, 103, 105, 107, 109 can each be a slit.

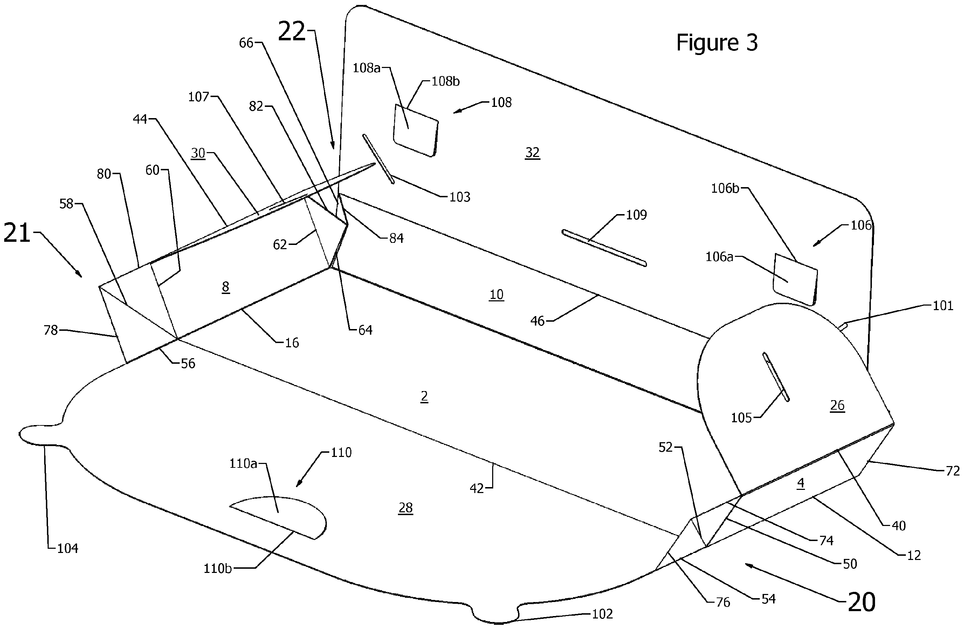

In the case of the embodiment of the tray shown in Fig. 2, initially three flaps 26, 30 and 32 are connected to each other by the inserting means 106 and 108 being inserted into receiving means 105 and 107 respectively. The inserting means 106 and 108 are shown as including a tab 106a and 108a respectively which is cut out of the blank 1 on three sides. The fourth side is not slit but could be scoured or perforated and forms a fold line 106b, 108b respectively. The receiving means 105 and 107 are shown as slits. Figure 3 shows an early stage in this process in which the flaps 26 and 30 have been rotated about fold lines 12, 40 and 16, 44, respectively so that side walls 4 and 8 are nearly vertical. Flap 32 has been rotated about fold lines 18 and 46 so that side wall 10 is nearly vertical. To complete the next stage, flaps 26, 30 and 32 are rotated further and tabs 106a and 108a are inserted in slits 105 and 107 respectively.

As shown in Figure 3 flap 28 has not been folded or rotated, the side wall of the tray formed by side panel 6 is open. Food can now be loaded onto the bottom panel 2 through this side wall.

Receiving means 101 and 103 can be slits at an angle such that when the lap 32 is rotated to cover the top of the tray and to complete the pouch, the receiving means 103 (e.g. a slit) receives an inserting means 104 (e.g. a tab), and receiving means 101(e.g. a slit) receives an inserting means 102 (e.g. a tab). It is preferred if flap 28 is folded over flap 32. Then inserting means 110 having a tab 110a is inserted into receiving means 109, (e.g. a slit).

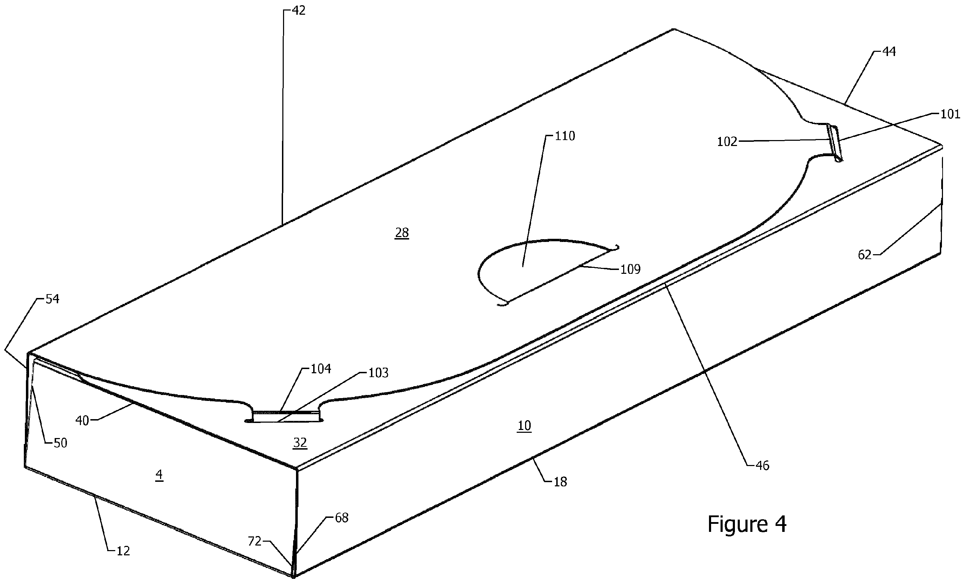

The completed steaming patch is shown in Figure 4 and is ready for cooking or for storage in a deep freeze or a refrigerator. After warming or cooking in an oven, in a microwave oven or on a barbecue the flap 28 can be released and folded back to open side panel 6 as shown in Figure 3 to remove the food. The inserting means 102, 104, 106, 108 can all be removed rupture-free or tear-free from the associated receiving means and a flat sheet regained for cleaning, storing and re-using.

Any, some or all of the inserting means 102, 104, 106, 108 can be formed as a mushroom head with a narrower waist as described for the embodiment of Figure 1. The waists are narrower than the corresponding slits of the receiving means such that when the heads are inserted in the corresponding receiving means the heads are trapped in the receiving means e.g. in the form of slits. The inserting means can be removed rupture-free or tear-free from the receiving means because the sheet material of blank 1 is flexible.

The gussets 20, 21, 22, 23 are delineated in blank 1 by three fold lines 50, 52, 54 and cut lines 74, 76 (gusset 20), fold lines 56, 58 60, and cut lines 78, 80 (gusset 21), fold lines 62, 64, 66 and cut lines 82, 84 (gusset 22), fold lines 68, 70, 72 and cut lines 86, 88 (gusset 23). When flaps 26, 28, 30 are rotated to form and cover the tray each gusset 20, 21, 22, 23 is preferably tucked towards the interior of the tray, so that in the completed tray each gusset 20, 21, 22, 23 lies preferably inside the tray. One or more gussets can be tucked towards the exterior of the tray, whereby the steaming effect will still be present, though in a lesser way.

A further embodiment of the present invention comprises another method of forming a folded, liquid retaining, re-usable, glueless, leak resistant and heat resistant cooking vessel such as of a steaming pouch of the "papillote" type from a single flat sheet blank by, for example, means of cutting, stamping or slitting, scoring and folding only, the vessels being storable as flat sheets between uses, the method having the steps:
1) Opposing side panels 4, 6, 8, 10 of blank 1 form side walls of the tray by being rotated about the fold lines 12, 14, 16, 18 respectively to a substantially upright position, e.g. to an at angle of approximately 60-90 degrees with respect to the bottom panel 2 which is held horizontal. The same can be done if the bottom panel 2 is held vertically or in any other position.
2) With the side panels 4, 6, 8, 10 folded substantially upright about respective fold lines 12, 14, 16, 18, each of the foldable gussets 20, 21, 22, 23 is folded about scored fold lines 50, 52, 54 (gusset 20), scored fold lines 56, 58 60, (gusset 21), scored fold lines 62, 64, 66 (gusset 22), scored fold lines 68, 70, 72 (gusset 23) such that each gusset 20, 21, 22, 23 is folded to be preferably inside the tray.
3) The gussets 20, 21, 22, 23 are maintained in this position without the use of adhesive, glue, fasteners such as screws, bolts, clips, etc. Outer flaps 26, 28, 30, 32 are rotated and folded inwardly at fold lines 40, 42, 44, 46, whereby an outer flap 26, 28, 30, 32 has means for connecting to another of the outer flaps 26, 28, 30, 32 in such a manner as to form the tray and to collapse the gussets 20, 21, 22, 23 preferably inwardly into the tray and to prevent them from opening. The means for connecting are made by processes such as folding, scoring drilling, slitting and cutting from the blank 1 and do not require glue or adhesive or welding or separate fasteners such as clips, screws, bolts, clamps, magnets. In the case of the embodiment of the tray shown in Figure 2, initially three flaps 26, 30 and 32 are connected to each other by the inserting means 1066 and 108 being inserted into receiving means 105 and 107 respectively. As flap 28 has not been folded or rotated, the side wall of the tray formed by side panel 6 is open. Food can now be loaded onto the bottom panel 2 through this side wall.
   When placing the food in the tray it is possible to hold the tray slightly inclined so that base 2 and flap 28 are slightly inclined upwardly along an axis parallel to folding line 14, and inserting means 106 and 108 of flap 32 are inserted in receiving means 105 of flap 26 and receiving means 107 of flap 30 respectively.

Flap 28 is now rotated above and onto flap 32 and inserting means 102, 104 and 110 are inserted into receiving means 101, 103, 109 respectively. The steaming pouch is now as shown in Figure 4 and is complete and ready for storing in a refrigerator or deep freeze for use later on or for warming or cooking. The pouch can be placed in an oven, a microwave or on a barbecue. After warming or cooking, food may be released from the tray by unfolding rupture-free or tear-free one of the outer flaps 26, 28, 30, 32 as well as its associated side panel 4, 6, 8, 10 and pouring or sliding the food out of the opening formed thereby. Alternatively, the cooked food can be left in the tray and the flaps 26, 28, 30, 32 are folded back rupture-free or tear-free so that the food can be eaten from the tray.

An alternative is to attach flap 32 to flaps 28 and 30 or flap 32 to flaps 26 and 28 leaving an end wall 4 or 8 respectively open on the short side and to slide the food in and out at this side.

To clean and to store the tray, the flaps 26, 28, 30, 32 can all be opened rupture-free or tear-free and the blank 1 regained. Cleaning can be done by hand or in a dishwasher. The single flat sheet 1 can be reused as described above.

Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made without departing from the scope of the appended claims.

## Claims

1. A folded, liquid retaining, re-usable, glueless, leak resistant and heat resistant cooking vessel made from a single flat sheet blank by means of cutting, drilling and slitting, scoring and folding only, the vessel being storable as flat sheets between uses, the flat sheet blank being made of non-stick coated or impregnated knotted, woven or non-woven glass fibres; the vessel having a liquid retaining tray with a polygonal base, pairs of opposing side walls integrally connected by gussets at corners of the tray to form the liquid retaining tray further comprising opposing flaps integrally connected to the opposing side walls, the opposing flaps forming the top of the vessel.

2. The cooking vessel of claim 1, the polygonal base of the vessel being quadratic with a square or rectangular shape, or
the polygonal base of the vessel being quadratic with a square or rectangular shape and the liquid retaining tray has a base and four side walls and four flaps, or the polygonal base is a rectangle with first and second opposing side walls being longer than third and fourth opposing side walls.

3. The cooking vessel of any of the previous claims, wherein the non-stick coated or impregnated knotted, woven or non-woven glass fibres, are coated or impregnated with a fluoropolymer, or
wherein the non-stick coated or impregnated knotted, woven or non-woven glass fibres are coated or impregnated with a high temperature plastic.

4. The cooking vessel of claim 3, wherein the fluoropolymer is PTFE (polytetrafluoroethylene) or PFA (a perfluoroalkoxy copolymer resin) or FEP (fluorinated ethylene propylene) or
wherein the high temperature plastics is PEEK (Polyether ether ketone).

5. The cooking vessel of any of the previous claims wherein the gussets are kept closed without use of glue, welds, adhesive, fasteners or snap fixtures by means of the folded opposing flaps which extend from each side wall to the opposing side wall.

6. The cooking vessel of any of the previous claims, wherein opposing flaps have connecting portions made only by cutting, drilling, stamping or slitting from the blank, the connecting potions being for connecting a flap from one side to be connected to a flap from another side reversibly.

7. The cooking vessel of claim 6, wherein connected flaps pull the opposing side walls into their final position in the cooking vessel with the gussets at the corners being closed.

8. The cooking vessel of any of the claims 2 to 7 wherein first to fourth flaps are each integrally formed with one of the first to fourth opposing side walls, respectively.

9. The cooking vessel of claim 8, wherein one of the first and second flaps is reversibly connected to the third and fourth flaps leaving the second or first side wall open for receipt of food, and/or
wherein one of the third and fourth flaps is reversibly connected to the first and second flaps leaving the fourth or third side wall open for receipt of food.

10. The cooking vessel of any of the claims 6 to 9, wherein the base, side walls, flaps, gussets and attachment portions are configured to be dismantled to regain the single flat sheet blank for cleaning and storing without rupture or tearing.

11. Use of the cooking vessel of any of the claims 1 to 10 in a process of cooking.

12. The use according to claim 11, wherein the cooking is in an oven, in a microwave oven or on a barbecue.

13. A method of forming a folded, liquid retaining, re-usable, glueless, leak resistant and heat resistant cooking vessel from a single flat sheet blank according to any of the claims 1 to 10, the method comprising:
opposing side panels of the flat sheet blank are formed into side walls of a tray by the side panels being rotated about fold lines respectively for each side wall to attain a substantially upright position, with respect to a bottom panel,
with the side panels folded substantially upright about the respective fold lines, gussets are formed by folding about respective fold lines to form a tray, each gusset being folded to be inside the tray at a corner of the bottom panel, whereby the gussets are maintained in this position without the use of adhesive, glue, welds, or fasteners, outer flaps are rotated and folded inwardly at fold lines, whereby each outer flap has means for connecting to one or more of the other outer flaps, the means for connecting are made by processes folding, scoring, drilling, slitting and cutting from the blank and do not require glue or adhesive or welding or separate fasteners, wherein three outer flaps are connected to each other to leave one side open for food entry.

14. The method of claim 13, further comprising rotating the remaining outer flap and attaching it to at least one other outer flap.

15. The method of claim 14, further comprising unfolding rupture-free or tear-free one of the outer flaps as well as its associated side panel.
